# EUROPÄISCHE PATENTANMELDUNG

(11) **EP 4 350 100 A1**
(43) Veröffentlichungstag der Anmeldung: **10.04.2024**
(21) Anmeldenummer: 22200228.9
(22) Anmeldetag: 07.10.2022
(51) Int. Cl.: E04F 19/04

(54) **WANDHOCHZUG FÜR BODENBELÄGE UND VERFAHREN ZUR HERSTELLUNG EINES WANDHOCHZUGS**

(71) Anmelder: Prossegger, Walfred, 9212 Techelsberg (AT)
(72) Erfinder: Prossegger, Walfred, 9212 Techelsberg (AT)
(74) Vertreter: Riebling, Peter

(57) **Zusammenfassung**

Werkseitig vorgefertigter Wandhochzug (5) für Bodenbeläge (4) aus Kunststoff, PVC, Kautschuk, Linoleum oder artverwandten Stoffen, zur Herstellung eines feuchtigkeitsdichten Wandabschlusses, wobei der bodenseitige Wandhochzug (5) aus einem Streifenzuschnitt (9) des Bodenbelags (4) gefertigt ist und einen Biegebereich (7) aufweist, um welchen der Streifenzuschnitt (9) gebogen ist, wobei im konvexen Biegebereich (7) des Streifenzuschnitts (7) das Material teilweise entfernt ist und durch ein Füllmaterial (15) ersetzt ist.

## Beschreibung

Die Erfindung betrifft einen Wandhochzug für Bodenbeläge und ein Verfahren zur Herstellung eines Wandhochzugs nach den Oberbegriffen der Patentansprüche 1, 11 und 12.

Bodenbeläge mit Wandhochzügen werden hauptsächlich in öffentlichen Gebäuden, wie Krankenhäusern, Senioren- und Pflegeheime, Laboren, Kindergärten oder Schulen verwendet. Solche Bodenbeläge müssen in diesen Gebäuden absolut feuchtigkeitsdicht ausgebildet sein und werden teilweise hoch beansprucht.

Unter einem Wandhochzug wird eine wannenförmige Verlegung eines Bodenbelags verstanden. Ein solcher Wandhochzug wird im Übergangsbereich zwischen dem Estrich und dem angrenzenden Mauerwerk angeordnet und mit dem Bodenbelag verbunden. Mit dem Wandhochzug wird damit ein fugenloser Übergang des Bodenbelags auf die angrenzende Wandfläche realisiert.

Die Wandhochzüge werden auf der Baustelle als Streifen mit einem Cuttermesser oder mit einer Kappsäge von dem eigentlichen Bodenbelag abgeschnitten, manuell gebogen und in den Übergangsbereich zwischen dem Estrich und dem Mauerwerk eingebaut. Der gebogene Wandhochzug weist auf der Rückseite eine konvexe Biegung auf, wodurch im eingebauten Zustand eine Art Hohlkehle entsteht. Eine solche Hohlkehle stellt eine Schwachstelle dar, da dies ein Hohlraum ist, welcher bei einer Druckbelastung beschädigt werden kann, wodurch der Wandhochzug nicht mehr feuchtigkeitsdicht ist.

Aus dem Stand der Technik sind ferner bereits maschinell vorgefertigte Wandhochzüge bekannt, welche auch Hohlkehlleisten genannt werden. Bei der Herstellung eines solches Wandhochzuges wird zunächst von einem Bodenbelag, welcher beispielsweise aus Kunststoff, PVC, Kautschuk, Linoleum oder artverwandten Stoffen besteht, ein Streifen maschinell zu geschnitten. Im Anschluss daran wird der Streifenzuschnitt vorzugsweise in einer Formgebungsvorrichtung entlang seiner Längsachse gebogen, so dass der Streifenzuschnitt in den Übergangsbereich zwischen dem Estrich und dem im 90° hierzu angeordneten Mauerwerk verlegt werden kann. Auf der Baustelle wird dann nur noch der gebogene Wandhochzug eingebaut und mit dem restlichen Bodenbelag verbunden, wodurch eine einheitliche Fläche entsteht.

Um eine mechanische Beschädigung, wie z.B. ein Einreißen des Wandhochzugs im Übergangsbereich zu verhindern, ist man dazu übergegangen den Biegebereich des Wandhochzuges mit Unterlegkeilen zu verstärken, wodurch dieser stoß- und druckfester wird. So wird beispielsweise auf der Rückseite ein durchgehender keilförmiger Stützkörper aus PVC angebracht. Der Stützkörper ist als separates Teil ausgebildet und wird in den Übergangsbereich zwischen dem Estrich und dem Mauerwerk geklebt.

Mit der EP 1 514 979 A1 wird ein Verfahren zur Herstellung eines Wandhochzuges für Bodenbeläge offenbart. Die vorliegende Anmeldung geht auf den gleichen Anmelder zurück und es wird vollumfänglich hierauf Bezug genommen.

Bei Verfahren gemäß der EP 1 514 979 A1 wird zunächst ein Streifenzuschnitt erstellt und mit einer Formgebungsvorrichtung in die gewünschte Form gebogen. Danach wird auf den konvexen Biegebereich ein dauerelastischer Kantenstützkeil aufgebracht. Der mit dem Verfahren hergestellte Wandhochzug weist somit bereits eine elastische Hohlkehlverstärkung auf, welche mit diesem verbunden ist. Durch die werksseitige Befestigung des Kantenstützkeils auf die Oberfläche des Wandhochzugs muss auf der Baustelle kein weiterer Stützkeil mehr montiert werden.

Teilweise wird der Wandhochzug aus einem sehr stabilen und nur bedingt elastischen Material hergestellt. Bei der Herstellung des Wandhochzuges entstehen durch den Biegevorgang des Streifenzuschnitts hohe Spannungen. Diese Spannungen werden auf den aufgebrachten PVC-Kantenstützkeil übertragen, wodurch sich dieser wieder von der Oberfläche des Wandhochzuges ablösen kann und eine Verstärkung im Biegebereich nicht dauerhaft gewährleistet ist.

Aufgabe der vorliegenden Erfindung ist es nun einen Wandhochzug mit einem Kantenstützkeil bereitzustellen, welcher eine bessere und dauerhafte Stützwirkung hat.

Zur Lösung der gestellten Aufgabe ist die Erfindung durch die technische Lehre des Anspruches 1 und der Ansprüche 11 und 12 gekennzeichnet.

Wesentliches Merkmal der Erfindung ist, dass im konvexen Biegebereich des Streifenzuschnitts das Material teilweise entfernt ist und durch ein Füllmaterial ersetzt ist.

Durch das teilweise Entfernen des Materials und das Auffüllen dieses Bereichs mit einem Füllmaterial findet eine Art Verankerung des Füllmaterials in dem Wandhochzug statt. Ein Ablösen des Füllmaterials wird damit weitgehend verhindert. Das elastische Material kann sich mitbewegen und hält eine gleichbleibende Biegung des Wandhochzuges aufrecht.

Der erfindungsgemäße Wandhochzug ist vorzugsweise werkseitig hergestellt. Der Zuschnitt, die Bearbeitung des Biegebereichs, der Biegevorgang können somit alle maschinell durchgeführt werden. Dadurch wird insbesondere eine gleichbleibende Qualität erreicht. Der werkseitig, vorgefertigte Wandhochzug weist damit den Vorteil auf, dass er als Fertigteil auf die Baustelle geliefert wird und bereits die gewünschten Schenkelmaße und eine Biegung mit dem gewünschten Radius aufweist. Auf der Baustelle muss damit kein Streifenzuschnitt von dem Bodenbelag oder Biegen mehr erfolgen, sondern nur noch ein Verbinden des Wandhochzugs mit dem Bodenbelag. Die Montage eines zusätzlichen Unterprofils bzw. Stützprofils ist nicht mehr notwendig.

Bei einer ersten bevorzugten Ausführungsform weist der Wandhochzug einen Biegebereich mit Lamellen und Nutenbereichen auf. Die Lamellen und Nutenbereiche wechseln sich ab und werden durch ein teilweises Entfernen des Materials hergestellt. Die Lamellen bilden somit den Wellenberg und die Nutenbereiche das Wellental aus. Vorzugsweise werden nur die Nutenbereiche durch eine spanabhebende Fertigung hergestellt, wodurch die Lamellen automatisch entstehen. Bei den Lamellen handelt es sich somit um das ursprüngliche Bodenbelagsmaterial, welches die gleiche Höhe bzw. Materialdicke aufweist. Nach der Herstellung der Lamellen und Nutenbereiche wird der Streifenzuschnitt auf das geforderte Maß gebogen. Im Anschluss daran wird in den gebogenen, konvexen Biegebereich das Füllmaterial eingefüllt. Das Füllmaterial befindet sich zumindest teilweise in den Nutenbereichen und stützt somit die beiden benachbarten Lamellen ab. Das Füllmaterial hat damit eine Stützwirkung, mit welcher die gebogene Form des Streifenzuschnitts bzw. des Wandhochzuges beibehalten wird.

Das Füllmaterial füllt entweder nur teilweise die Nutenbereiche oder die gesamten Nutenbereiche aus. Bei einem gesamten Ausfüllen wird mit dem Füllmaterial die Höhe der Lamellen erreicht. Es ist jedoch auch möglich, dass das Füllmaterial über die Lamellen hinaussteht, so dass das zusätzliche Material einen Art Stützkeil ausbildet.

Der Wandhochzug ist im Biegebereich gebogen, wodurch ein erster Schenkel entsteht, welcher später mit dem Mauerwerk verbunden wird und ein zweiter Schenkel entsteht, welcher mit dem Estrich verbunden wird. Vorzugsweise ist der Wandhochzug derart gebogen, dass die beiden Schenkel in einem rechten Winkel zueinander angeordnet sind. Selbstverständlich kann auch ein anderer Winkel (z.B. 75° oder 110°) zwischen den beiden Schenkel bestehen.

Die Bodenbeläge mit den Wandhochzügen können beispielsweise in Wohnungen, Gesundheitswesen, Bildung, Sport, Einzelhandel, Industrie, Büros, Gastgewerbe und Transportfahrzeuge eingesetzt werden.

Der Bodenbelag ist beispielsweise eine Rollen-, Fliesen- oder Plankenware und besteht beispielsweise aus PVC, Kautschuk, Linoleum oder artverwandten Stoffen.

Das Material des Wandhochzugs besteht vorzugsweise aus dem gleichen Material, wie der Bodenbelag. Der Bodenbelag weist normalerweise eine gewisse Elastizität auf. Dies bedeutet, dass bei einem erfolgten Biegevorgang das Material wieder in seine ursprüngliche Form zurückdrückt. Um dies zu verhindern weist der erfindungsgemäße Wandhochzug im konvexen Biegebereich ein Füllmaterial auf, welches zwischen den Lamellen in die Nutenbereiche eingefüllt ist und die Lamellen gegeneinander abstützt.

Das Füllmaterial besteht beispielsweise aus einem Kunststoff (z.B. dauerelastischer Kunststoff, Thermoplast, Elastomer), einem Klebstoff (z.B. Schmelzklebstoff) oder einem anderen Material. Das Füllmaterial dient zu Versteifung bzw. Verfestigung der gebogenen Form des Wandhochzuges.

Das Füllmaterial ist vorzugsweise bis zur Oberkante der Lamellen des Wandhochzuges eingefüllt. Die Materialdicke im Biegebereich entspricht dann der Materialdicke des Wandhochzuges. Es ist jedoch auch möglich, dass sich das Füllmaterial über die Lamellen erstreckt und eine gewisse Form ausbildet. Das Füllmaterial bildet dann eine Art Kantenstützkeil aus, dessen Form an die jeweilige Einbausituation des Wandhochzuges angepasst ist. Die Höhe des Füllmaterials über den Lamellen kann beispielsweise bis zu 8 mm betragen.

Bei einer bevorzugten Ausführungsform weist der Wandhochzug im konvexen Biegebereich Lamellen und Nutenbereiche mit einem bestimmten Muster auf. Das Muster kann beispielsweise ein Zacken,- Wellen- oder eckige Form aufweisen. Entscheidend ist, dass die Nutenbereiche so groß gewählt werden, dass das Füllmaterial eingefüllt werden kann und damit seine Stützwirkung zwischen den Lamellen des Wandhochzuges entfaltet.

Die Lamellen und Nutenbereiche können sich beispielsweise in Richtung der Längsachse oder quer zur Längsachse des Streifenzuschnitts erstrecken. Es ist jedoch auch möglich, dass die Lamellen und Nutenbereiche in einem gewissen Winkeln gegenüber der Längsachse des Wandhochzuges angeordnet sind.

Bei einer weiteren bevorzugten Ausführungsform ist der Nutenbereich eine einzige flächige Ausnehmung. Der Wandhochzug weist dann im Biegebereich einen Verbindungsstreifen auf, welcher nicht bearbeitet ist. An den Verbindungsstreifen schließt sich eine flächige Ausnehmung an, welche später mit dem Füllmaterial ausgefüllt ist.

Der erfindungsgemäße Wandhochzug gliedert sich vorzugsweise in einen ersten Schenkel, einen Biegebereich und einen zweiten Schenkel. Der erste Schenkel weist beispielsweise eine Länge von 10cm und der zweite Schenkel von 10 cm auf. Es sind jedoch auch 10cm zu 6 cm oder andere Verhältnisse möglich. Die beiden Schenkel sind beispielsweise in einem rechten Winkel zueinander angeordnet.

Neben dem Wandhochzug wird ferner noch ein Schutz für ein Verfahren zur Herstellung eines werksseitig vorgefertigten, streifenförmigen Wandhochzuges aus Kunststoff, PVC, Kautschuk, Linoleum oder artverwandten Stoffen beansprucht.

Das erfindungsgemäße Verfahren besteht aus den folgenden Arbeitsschritten:
- maschineller Streifenzuschnitt von einem Bodenbelag;
- Teilweises Entfernen des Materials des Streifenzuschnitts im zukünftigen Biegebereich des Wandhochzuges;
- Biegen des Streifenzuschnitts in einer Formgebungsvorrichtung, wodurch auf der Rückseite des Streifenzuschnitts (9) ein konvexer Biegebereich entsteht;
- Einbringen eines Füllmaterials aus dauerelastischem Kunststoff in den konvexen Biegebereich.

Bei einer weiter bevorzugten Verfahrensausführung werden die folgenden Arbeitsschritte durchgeführt:
- maschineller Streifenzuschnitt des Wandhochzugs;
- Einzug des Streifenzuschnitts in eine Formgebungsvorrichtung und teilweises Entfernen des Materials in einem Biegebereich, wodurch Lamellen und Nutenbereiche hergestellt werden;
- Biegen des Streifenzuschnitts im Biegebereich durch die Formgebungsvorrichtung, wodurch auf der Rückseite des Streifenzuschnitts ein konvexer Biegebereich entsteht;
- Einbringen eines Füllmaterials aus dauerelastischem Kunststoff in den konvexen Biegebereich, wobei das Füllmaterial zwischen die Lamellen in die Nutenbereiche angeordnet wird.

Als weiterer Verfahrensschritt kann beispielsweise das Füllmaterial über die Lamellen hinaus eingefüllt werden, wodurch die Materialdicke des Biegebereichs größer als die Materialdicke des Wandhochzuges ist.

Das Entfernen des Materials im Biegebereich erfolgt vorzugsweise mit einem spanabhebenden Verfahren. Dies kann beispielsweise ein Fräsen des Streifenzuschnitts sein. Es ist jedoch auch möglich, dass mit Hilfe eines Lasers die Lamellen und Nutenbereiche erstellt werden.

Des Weiteren können die Streifenzuschnitte vor dem Einfüllen des Füllmaterials erwärmt werden. Dadurch wird eine bessere Verbindung zwischen dem Füllmaterial und den Lamellen bzw. Nutenbereichen erreicht.

Bei der Montage des Wandhochzuges wird dieser auf der Baustelle vorzugsweise mit einem Cuttermesser oder einer Kappsäge auf die gewünschte Länge abgelängt. Die Länge der Wandhochzug-Leisten beträgt beispielsweise 240 cm, wodurch diese einfach zu handhaben sind und eine hohe Verlegeleistung ermöglichen.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von mehreren Ausführungswegen darstellenden Zeichnungen näher erläutert. Hierbei gehen aus den Zeichnungen und ihrer Beschreibung weitere erfindungswesentliche Merkmale und Vorteile der Erfindung hervor.
- Figur 1:: schematische Darstellung eines eingebauten Wandhochzuges
- Figur 2:: schematische Darstellung eines Streifenzuschnitts mit Lamellen und Nutenbereichen
- Figur 3:: detaillierte Darstellung des Biegebereichs des Wandhochzuges gemäß Figur 1
- Figur 4:: schematische Darstellung des Wandhochzuges mit dem Nutenbereich
- Figur 5:: Ausführungsform des Wandhochzuges mit gezackten Lamellen
- Figur 6:: Ausführungsform des Wandhochzuges mit runden Lamellen
- Figur 7:: Ausführungsform des Wandhochzuges mit eckigen Lamellen
- Figur 8:: Rückansicht auf den Wandhochzug mit Lamellen und Nutenbereichen
- Figur 9:: schematische Darstellung des Wandhochzuges mit größerer Materialdicke im Biegebereich

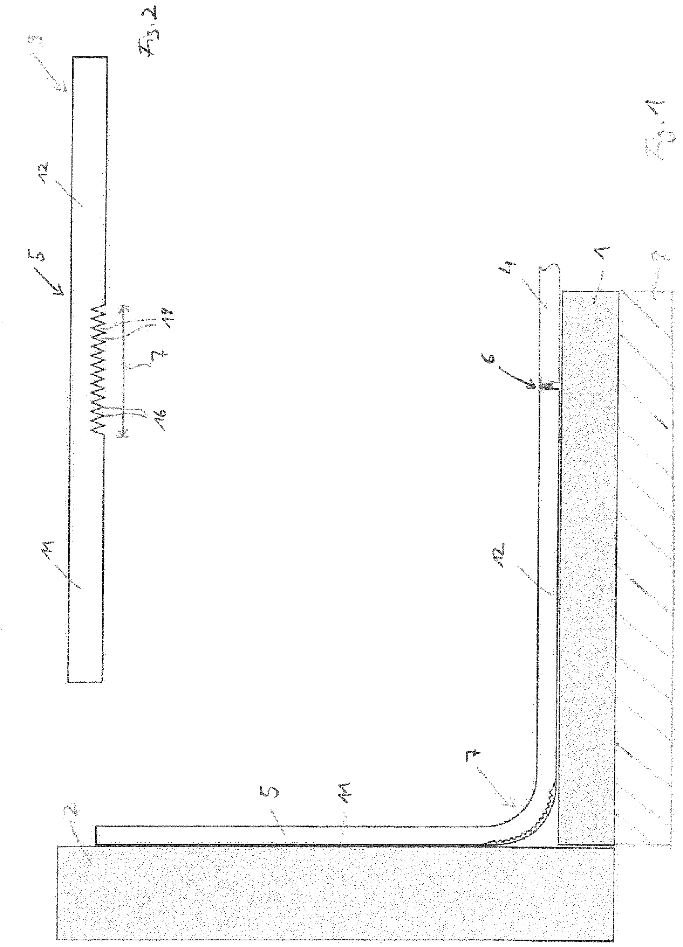

Mit der Figur 1 wird der erfindungsgemäße Wandhochzug 5 im eingebauten Zustand dargestellt.

Der erfindungsgemäße Wandhochzug 5 weist eine Vorderseite auf, welche die Sichtseite bildet. Vorzugsweise besteht der Wandhochzug 5 aus dem gleichen Material, wie der Bodenbelag 4 und wird aus einem Streifenzuschnitt 9 des Bodenbelags 4 hergestellt. Die Vorderseite des Wandhochzugs 5 entspricht somit der Oberseite des Bodenbelags 4. Des Weiteren weist der Wandhochzug eine Rückseite auf, welche mit dem Mauerwerk 2 und dem Estrich 1 verbunden wird. Durch den Biegevorgang des Streifenzuschnitts 9 bzw. des Wandhochzugs 5 entsteht auf der Rückseite ein konvexer Biegebereich 7.

Der Estrich 1 ist als schwimmender Estrich 1 ausgebildet und liegt auf einer Massivdecke 8 auf. Zwischen dem Estrich 1 und dem Mauerwerk 2 besteht ein Spalt, in welchem ein Randdämmstreifen angeordnet kann.

Der Übergang zwischen dem Estrich 1 und dem angrenzenden Mauerwerk 2 muss als absolut feuchtigkeitsdichte Verbindung ausgebildet sein, welche weder durch Wärmeausdehnung, noch durch Schrumpfung bei Kälte, noch durch mechanische Belastungen, etwa durch Bodenreinigungsmaschinen ihre absolute Dichtheit verliert.

Eine solche feuchtigkeitsdichte Verbindung wird mit dem erfindungsgemäßen Wandhochzug 5 erreicht. Der Wandhochzug 5 ist gebogen ausgebildet und besteht im Wesentlichen aus einem erster Schenkel 11, welcher mit dem Mauerwerk 2 verbunden ist und aus einem zweiten Schenkel 12, welcher mit dem Estrich 1 verbunden ist. Zwischen dem ersten Schenkel 11 und dem zweiten Schenkel 12 befindet sich der Biegebereich 7. Der zweite Schenkel 12 ist mit einer Schweißnaht 6 mit dem Bodenbelag 4 verbunden.

Figur 2 zeigt einen Streifenzuschnitt 9 mit einem Biegebereich 7. Der Streifenzuschnitt 9 ist noch nicht gebogen. Im Bereich 7 wurde bereits teilweise Material entfernt, wodurch sich Lamellen 16 und Nutenbereiche 18 gebildet haben.

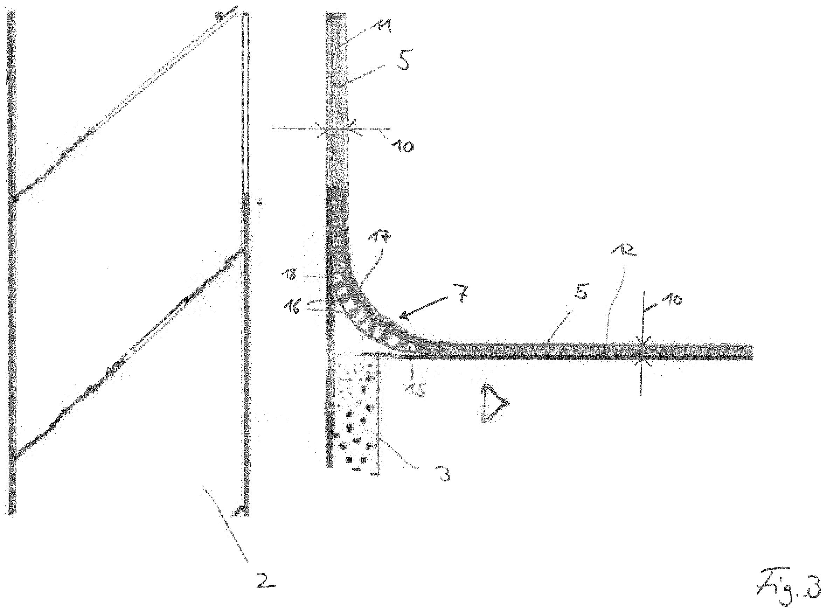

Figur 3 zeigt den Biegebereich 7 des Wandhochzugs 5 gemäß der Figur 1 im Detail. Bei dem Wandhochzug 5 ist im Biegebereich 7 das Material teilweise entfernt und durch ein anderes Füllmaterial 15 ersetzt.

Der Biegebereich 7 weist eine konvex ausgebildete Rückseite auf und besteht aus zwei, übereinander angeordnete Teilbereiche. Bei dem ersten Teilbereich handelt es sich um einen Verbindungsstreifen 17. Der Verbindungsstreifen 17 ist der verbleibende Bereich, welcher nicht bearbeitet wird. Der Verbindungstreifen 17 bildet die Oberseite des Wandhochzugs 5 und ist der sichtbare Bereich. Bei dem zweiten Bereich wird zuerst durch eine spanhabende Bearbeitung Material entfernt und im Anschluss durch ein Füllmaterial 15 wieder aufgefüllt wird.

Das Entfernen des Materials im Biegebereich 7 erfolgt vorzugsweise mit einem bestimmten Muster. Als Muster sind beispielsweise Zacken, Rundungen, Wellen, eckige Formen oder andere geometrische Formen möglich. Bei der Figur 2 ist es ein streifenförmiges Muster, wobei sich die Streifen in Richtung der Längsachse des Streifenzugschnitts 9 erstrecken.

Die Muster weisen ein Wellental und einen Wellenberg auf. Der Wellenberg wird durch die Lamellen 16 gebildet. Das Wellental wird durch Nutenbereiche 18 gebildet. Vorzugsweise sind die Lamellen 16 so hoch ausgebildet, dass die Materialdicke 19 des Füllbereichs 14 der Materialdicke 10 des Wandhochzugs 5 entspricht.

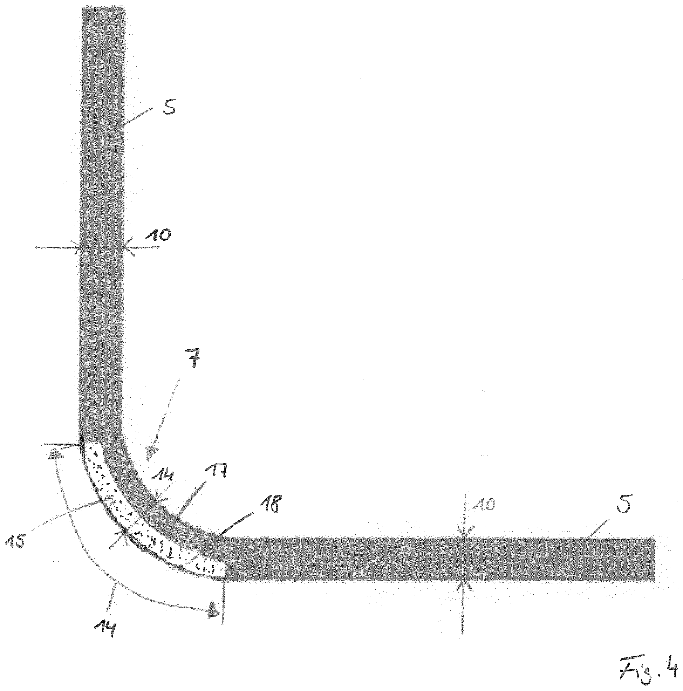

Figur 4 zeigt den Wandhochzug 5 mit dem Biegebereich 7. Im Biegebereich 7 befindet sich der Verbindungsstreifen 17, welcher die sichtbare Oberfläche des Wandhochzugs 6 bildet. Der Verbindungsstreifen 17 weist gegenüber den beiden Schenkeln 11, 12 eine verminderte Materialdicke auf. Die Verminderung der Materialdicke im Biegebereich 7 erfolgt durch eine spanabhebende Bearbeitung, wodurch gezielt Material entfernt wird und ein Füllbereich 14 erstellt wird. Vorzugsweise erfolgt das Entfernen des Materials mit einem bestimmten Muster.

Durch das Einbringen des Füllmaterials 15 in den Füllbereich 14 wird die Formhaltung des Wandhochzuges 5 unterstützt und das Rückstellverhalten auf ein Minimum reduziert. Der Füllbereich 14 bildet somit eine Art Stabilisierung, wodurch die werkseitig gebogene Form des Wandhochzuges 5 langfristig beibehalten bleibt.

Bei der Figur 4 handelt es sich um eine weitere Ausführungsform des erfindungsgemäßen Wandhochzuges 5, wobei das Füllmaterial 15 im Nutenbereich 18 vollflächig, d.h. das Material des Wandhochzuges 5 wurde ohne ein bestimmtes Muster entfernt. Der einzige Nutenbereich 18 ist mit einem Füllmaterial 15 aufgefüllt, wodurch die Materialdicke 14 des Biegebereichs 7 der Materialdicke 10 der beiden Schenkel 11, 12 entspricht. Es ist ferner auch möglich, dass mehr Füllmaterial 15 in den Nutenbereich 18 eingefüllt wird, wodurch sich das Füllmaterial 15 über den Umfang des Wandhochzuges 5 erstreckt und sich dadurch ein Art Kantenstützkeil bildet.

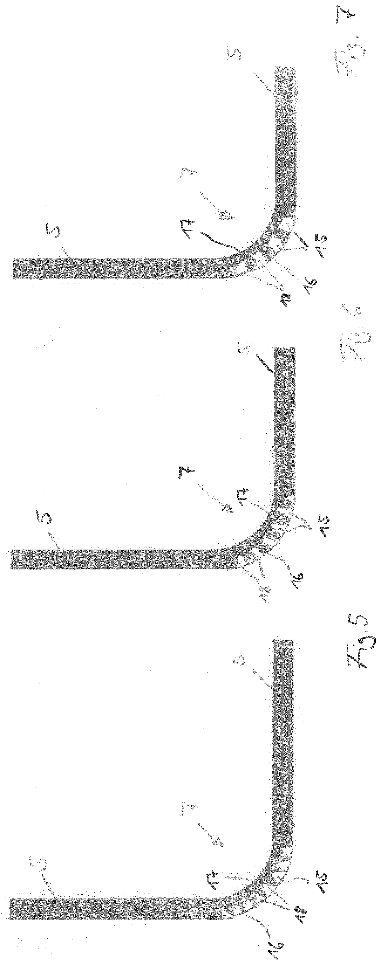

Mit den Figuren 5, 6 und 7 werden Wandhochzüge 5 mit unterschiedliche Lamellen 16 bzw. Nutenbereichen 18 dargestellt. Bei den Lamellen 16 handelt es sich um das ursprüngliche Material des Wandhochzuges 5, welches bearbeitet wurde und dadurch die Lamellen entstanden sind. Die Nutenbereiche 18 sind mit einem Füllmaterial 15 aufgefüllt.

Gemäß der Figur 5 sind die Lamellen 16 und Nutenbereiche 18 zackenförmig ausgebildet. Das Füllmaterial 15 wird in die Nutenbereich 18 eingefüllt und bildet eine Einheit mit den Lamellen 16 aus.

Figur 6 zeigt einen Wandhochzug 5 mit Lamellen 16 und Nutenbereiche 18, welche wellenförmig ausgebildet sind. Das Füllmaterial 15 wird in die wellenförmigen Nutenbereiche 18 eingefüllt und bildet eine Einheit mit den wellenförmigen Lamellen 16 aus.

Die Figur 7 zeigt einen Wandhochzug 5 mit eckigen Lamellen 16 und eckigen Nutenbereichen 18.

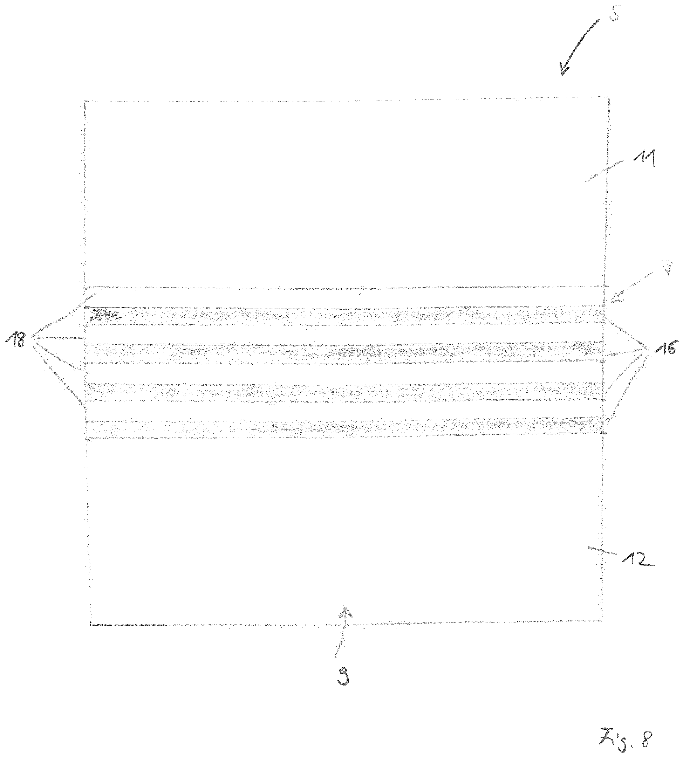

Mit der Figur 8 wird ein ebener, ungebogener Streifenzuschnitt 9 gezeigt, welcher zu einem Wandhochzug 5 verarbeitet wird. Der Streifenzuschnitt 9 ist vorzugsweise aus dem gleichen Material, wie der Bodenbelag 4 und wird maschinell von dem Bodenbelag 4 abgetrennt.

Gemäß der Figur 8 ist die Rückseite des Streifenzuschnitts 9 dargestellt, wobei im zukünftigen Biegebereich 7 bereits teilweise Material entfernt wurde. Die Bearbeitung erfolgte durch das teilweise Entfernen von Material in Form von Längsstreifen, wodurch sich erhöhte Lamellen 16 und vertiefte Nutenbereiche 18 gebildet haben. Der Streifenzuschnitt 9 weist nun einen ersten Teilbereich auf, welche später der erste Schenkel 11 bildet. Es folgt der Biegebereich 7 mit den Lamellen 16 und den Nutenbereichen 18, welche später mit dem Füllmaterial 15 ausgefüllt werden. Und danach folgt der zweite Schenkel 12, welcher später mit dem Estrich 1 verbunden wird.

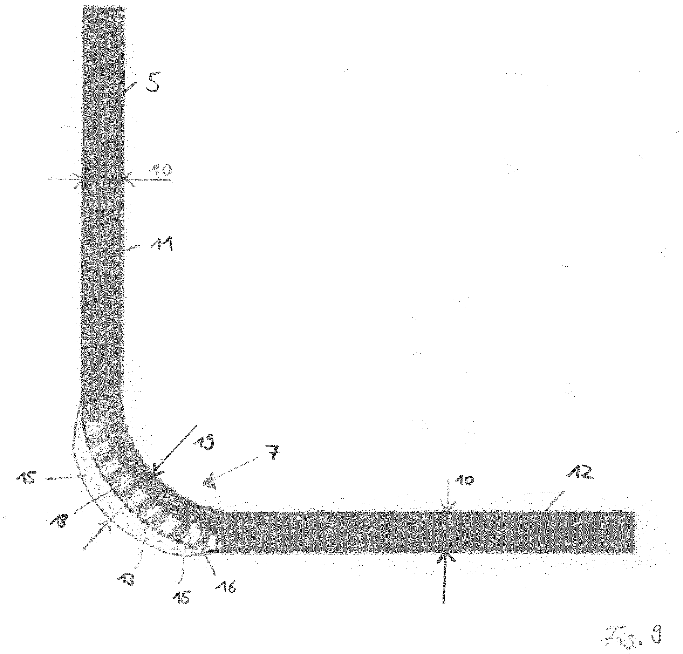

Figur 9 zeigt eine weitere Ausführungsform des Wandhochzuges 5. Der konvexe Biegebereich 7 weist einen Füllbereich 14 auf, dessen Materialdicke 19 größer ist, als die Materialdicke 10 der beiden Schenkel 11 und 12. Das Füllmaterial 15 erstreckt sich somit über den eigentlichen Umfang des Wandhochzuges 5 hinaus und bildet durch den Überstand einen Art Kantenstützkeil, welcher als elastische Hohlkehlverstärkung ausgebildet ist.

### Zeichnungslegende

- 1.: Estrich
- 2.: Mauerwerk
- 3. 4.: Bodenbelag
- 5.: Wandhochzug
- 6.: Schweißnaht
- 7.: Biegebereich
- 8.: Massivdecke
- 9.: Streifenzuschnitt
- 10.: Materialdicke von 5
- 11.: 1.Schenkel
- 12.: 2.Schenkel
- 13.: Kantenstützkeil
- 14.: Füllbereich
- 15.: Füllmaterial
- 16.: Lamellen
- 17.: Verbindungsstreifen
- 18.: Nutenbereich
- 19.: Materialdicke von 7

## Patentansprüche

**1.** Werkseitig vorgefertigter Wandhochzug (5) für Bodenbeläge (4) aus Kunststoff, PVC, Kautschuk, Linoleum oder artverwandten Stoffen, zur Herstellung eines feuchtigkeitsdichten Wandabschlusses, wobei der bodenseitige Wandhochzug (5) aus einem Streifenzuschnitt (9) des Bodenbelags (4) gefertigt ist und einen Biegebereich (7) aufweist, um welchen der Streifenzuschnitt (9) gebogen ist, **dadurch gekennzeichnet, dass** im konvexen Biegebereich (7) des Streifenzuschnitts (7) das Material des Streifenzuschnitts (9) teilweise entfernt ist und durch ein Füllmaterial (15) ersetzt ist.

**2.** Wandhochzug (5) nach Anspruch 1, **dadurch gekennzeichnet, dass** das Füllmaterial (15) aus einem dauerelastischen Kunststoff besteht.

**3.** Wandhochzug (5) nach Anspruch 1, **dadurch gekennzeichnet, dass** das Füllmaterial (15) aus einem Thermoplast oder Elastomer besteht.

**4.** Wandhochzug (5) nach einem der Ansprüche 1 bis 3, **dadurch gekennzeichnet, dass** der konvexe Biegebereich (7) mindestens eine sich in Längsrichtung erstreckende und aus dem Material des Bodenbelags (4) gebildete Lamelle (16) und mindestens einen jenseits der Lamelle (16) ausgesparten Nutenbereich (18) aufweist und dass das Füllmaterial (15) in dem Nutenbereich (18) angeordnet ist.

**5.** Wandhochzug (5) nach einem der Ansprüche 1 bis 3, **dadurch gekennzeichnet, dass** der konvexe Biegebereich (7) Lamellen (16) und Nutenbereiche (18) mit einem bestimmten Muster aufweist.

**6.** Wandhochzug (5) nach Anspruch 5, **dadurch gekennzeichnet, dass** das Muster eine Zacken- Wellen- oder eckige Form aufweist.

**5.** Wandhochzug (5) nach einem der Ansprüche 1 bis 4, **dadurch gekennzeichnet, dass** der Biegebereich (7) eine Materialdicke (19) aufweist, welche einer Materialdicke (10) des Streifenzuschnitts (9) entspricht.

**6.** Wandhochzug (5) nach einem der Ansprüche 1 bis 4, **dadurch gekennzeichnet, dass** der Biegebereich (7) eine Materialdicke (19) aufweist, welcher größer als eine Materialdicke (10) des Streifenzuschnitts (9) ist.

**7.** Wandhochzug (5) nach einem der Ansprüche 1 bis 6, **dadurch gekennzeichnet, dass** sich die Lamellen (16) und die Nutenbereiche (18) parallel in Richtung der Längsachse oder quer zur Längsachse des Streifenzuschnitts (9) erstrecken.

**8.** Wandhochzug (5) nach einem der Ansprüche 1 bis 7 **dadurch gekennzeichnet, dass** sich die Lamellen (16) und die Nutenbereiche (18) in einem gewissen Winkeln gegenüber der Längsachse des Streifenzuschnitts (9) angeordnet sind.

**9.** Wandhochzug (5) nach einem der Ansprüche 1 bis 7, **dadurch gekennzeichnet, dass** sich das Füllmaterial (15) über die Oberfläche des Streifenzuschnitts (9) erstreckt und einen Kantenstützkeil (13) ausbildet.

**10.** Wandhochzug (5) nach einem der Ansprüche 1 bis 9, **dadurch gekennzeichnet, dass** der Wandhochzug (5) und der Bodenbelag (4) mit einer Schweißnaht (6) miteinander verbunden sind.

**11.** Verfahren zur Herstellung eines werksseitig vorgefertigten, streifenförmigen Wandhochzuges (5) aus Kunststoff, PVC, Kautschuk, Linoleum oder artverwandten Stoffen, bestehend aus den Arbeitsschritten:
• maschineller Streifenzuschnitt (9) von einem Bodenbelag (4);
• Teilweises Entfernen des Materials des Streifenzuschnitts (9) im zukünftigen Biegebereich (7) des Wandhochzuges (5);
• Biegen des Streifenzuschnitts (9) in einer Formgebungsvorrichtung, wodurch auf der Rückseite des Streifenzuschnitts (9) ein konvexer Biegebereich (7) entsteht;
• Einbringen eines Füllmaterials (15) aus dauerelastischem Kunststoff in den konvexen Biegebereich (7).

**12.** Verfahren zur Herstellung eines werksseitig vorgefertigten, streifenförmigen Wandhochzuges (5) aus Kunststoff, PVC, Kautschuk, Linoleum oder artverwandten Stoffen, bestehend aus den Arbeitsschritten:
• maschineller Streifenzuschnitt (9) des Wandhochzugs (5);
• Einzug des Streifenzuschnitts (9) in eine Formgebungsvorrichtung und teilweises Entfernen des Materials in einem Biegebereich (7), wodurch Lamellen (16) und Nutenbereiche (18) hergestellt werden;
• Biegen des Streifenzuschnitts (9) im Biegebereich (7) durch die Formgebungsvorrichtung, wodurch auf der Rückseite des Streifenzuschnitts (9) ein konvexer Biegebereich (7) entsteht;
• Einbringen eines Füllmaterials (15) aus dauerelastischem Kunststoff in den konvexen Biegebereich (7), wobei das Füllmaterial (15) zwischen die Lamellen (16) in die Nutenbereiche (18) angeordnet wird.

**13.** Verfahren nach einem der Ansprüche 11 und 12, **dadurch gekennzeichnet, dass** das Füllmaterial (15) über die Lamellen (16) eingefüllt wird, wodurch die Materialdicke (19) des Biegebereichs (7) größer ist als die Materialdicke (10) des Wandhochzuges (5).

**14.** Verfahren nach einem der Ansprüche 11 bis 13, **dadurch gekennzeichnet, dass** das Entfernen des Materials im Biegebereich (7) mit einem spanabhebenden Verfahren oder einem Laser erfolgt.

**15.** Verfahren nach einem der Ansprüche 11 bis 14, **dadurch gekennzeichnet, dass** der Streifenzuschnitt (9) vor dem Einfüllen des Füllmaterials (15) erwärmt wird.

## Geänderte Patentansprüche

### Geänderte Patentansprüche gemäss Regel 137(2) EPÜ.

1. Werkseitig vorgefertigter Wandhochzug (5) für Bodenbeläge (4) aus Kunststoff, PVC, Kautschuk, Linoleum oder artverwandten Stoffen, zur Herstellung eines feuchtigkeitsdichten Wandabschlusses, wobei der bodenseitige Wandhochzug (5) aus einem Streifenzuschnitt (9) des Bodenbelags (4) gefertigt ist und die Vorderseite des Wandhochzugs (5) der Oberseite des Bodenbelags (4) entspricht, wobei der Wandhochzug (5) aus einem ersten Schenkel (11) und einem zweiten Schenkel (12) besteht zwischen welchen sich ein gebogener Biegebereich (7) befindet, welcher auf der Vorderseite des Wandhochzugs (5) konkav ausgebildet ist, wobei im konvexen Biegebereich (7) auf der Rückseite des Streifenzuschnitts (7) das Material des Streifenzuschnitts (9) teilweise entfernt ist und durch ein Füllmaterial (15) ersetzt ist.

2. Wandhochzug (5) nach Anspruch 1, **dadurch gekennzeichnet, dass** das Füllmaterial (15) aus einem dauerelastischen Kunststoff, insbesondere aus einem Thermoplast oder Elastomer besteht.

3. Wandhochzug (5) nach Anspruch 1, **dadurch gekennzeichnet, dass** der zweite Schenkel (12) mit einer Schweißnaht (6) mit dem Bodenbelag (4) verbindbar ist.

4. Wandhochzug (5) nach einem der Ansprüche 1 bis 3, **dadurch gekennzeichnet, dass** der konvexe Biegebereich (7) mindestens eine sich in Längsrichtung erstreckende und aus dem Material des Bodenbelags (4) gebildete Lamelle (16) und mindestens einen jenseits der Lamelle (16) ausgesparten Nutenbereich (18) aufweist und dass das Füllmaterial (15) in dem Nutenbereich (18) angeordnet ist.

5. Wandhochzug (5) nach einem der Ansprüche 1 bis 3, **dadurch gekennzeichnet, dass** der konvexe Biegebereich (7) Lamellen (16) und Nutenbereiche (18) mit einem bestimmten Muster aufweist.

6. Wandhochzug (5) nach Anspruch 5, **dadurch gekennzeichnet, dass** das Muster eine Zacken- Wellen- oder eckige Form aufweist.

7. Wandhochzug (5) nach einem der Ansprüche 1 bis 4, **dadurch gekennzeichnet, dass** der Biegebereich (7) eine Materialdicke (19) aufweist, welche einer Materialdicke (10) des Streifenzuschnitts (9) entspricht.

8. Wandhochzug (5) nach einem der Ansprüche 1 bis 4, **dadurch gekennzeichnet, dass** der Biegebereich (7) eine Materialdicke (19) aufweist, welcher größer als eine Materialdicke (10) des Streifenzuschnitts (9) ist.

9. Wandhochzug (5) nach einem der Ansprüche 1 bis 6, **dadurch gekennzeichnet, dass** sich die Lamellen (16) und die Nutenbereiche (18) parallel in Richtung der Längsachse oder quer zur Längsachse des Streifenzuschnitts (9) erstrecken.

10. Wandhochzug (5) nach einem der Ansprüche 1 bis 7 **dadurch gekennzeichnet, dass** sich die Lamellen (16) und die Nutenbereiche (18) in einem gewissen Winkeln gegenüber der Längsachse des Streifenzuschnitts (9) angeordnet sind.

11. Wandhochzug (5) nach einem der Ansprüche 1 bis 7, **dadurch gekennzeichnet, dass** sich das Füllmaterial (15) über die Oberfläche des Streifenzuschnitts (9) erstreckt und einen Kantenstützkeil (13) ausbildet.

12. Bodenaufbau umfassend einen Bodenbelag (4) und einen Wandhochzug (5) nach einem der Ansprüche 1 bis 9, **dadurch gekennzeichnet, dass** der Wandhochzug (5) und der Bodenbelag (4) mit einer Schweißnaht (6) miteinander verbunden sind.

13. Verfahren zur Herstellung eines werksseitig vorgefertigten, streifenförmigen Wandhochzuges (5) aus Kunststoff, PVC, Kautschuk, Linoleum oder artverwandten Stoffen, bestehend aus den Arbeitsschritten:
• maschineller Streifenzuschnitt (9) von einem Bodenbelag (4);
• Teilweises Entfernen des Materials des Streifenzuschnitts (9) im zukünftigen Biegebereich (7) des Wandhochzuges (5);
• Biegen des Streifenzuschnitts (9) in einer Formgebungsvorrichtung, wodurch auf der Rückseite des Streifenzuschnitts (9) ein konvexer Biegebereich (7) entsteht;
• Einbringen eines Füllmaterials (15) aus dauerelastischem Kunststoff in den konvexen Biegebereich (7).

14. Verfahren zur Herstellung eines werksseitig vorgefertigten, streifenförmigen Wandhochzuges (5) aus Kunststoff, PVC, Kautschuk, Linoleum oder artverwandten Stoffen, bestehend aus den Arbeitsschritten:
• maschineller Streifenzuschnitt (9) des Wandhochzugs (5);
• Einzug des Streifenzuschnitts (9) in eine Formgebungsvorrichtung und teilweises Entfernen des Materials in einem Biegebereich (7), wodurch Lamellen (16) und Nutenbereiche (18) hergestellt werden;
• Biegen des Streifenzuschnitts (9) im Biegebereich (7) durch die Formgebungsvorrichtung, wodurch auf der Rückseite des Streifenzuschnitts (9) ein konvexer Biegebereich (7) entsteht;
• Einbringen eines Füllmaterials (15) aus dauerelastischem Kunststoff in den konvexen Biegebereich (7), wobei das Füllmaterial (15) zwischen die Lamellen (16) in die Nutenbereiche (18) angeordnet wird.

15. Verfahren nach Anspruch 12, **dadurch gekennzeichnet, dass** das Füllmaterial (15) über die Lamellen (16) eingefüllt wird, wodurch die Materialdicke (19) des Biegebereichs (7) größer ist als die Materialdicke (10) des Wandhochzuges (5).

16. Verfahren nach einem der Ansprüche 11 bis 13, **dadurch gekennzeichnet, dass** das Entfernen des Materials im Biegebereich (7) mit einem spanabhebenden Verfahren oder einem Laser erfolgt.

17. Verfahren nach einem der Ansprüche 11 bis 14, **dadurch gekennzeichnet, dass** der Streifenzuschnitt (9) vor dem Einfüllen des Füllmaterials (15) erwärmt wird.
